# EUROPEAN PATENT SPECIFICATION

(11) **EP 2 695 690 B1**
(45) Date of publication and mention of the grant of the patent: **13.07.2016**
(21) Application number: 13179199.8
(22) Date of filing: 05.08.2013
(51) Int. Cl.: G01N 1/08

(54) **Increment borer accessory**
Inkrement-Bohrzubehör
Accessoire de tarière

(30) Priority: 06.08.2012 SI 201200251
(43) Date of publication of application: 12.02.2014
(73) Proprietor: Gozdarski institut Slovenije, 1000 Ljubljana (SI)
(72) Inventor: Levanic, Tomislav, 1000 Ljubljana (SI); Poljansek, Simon, 4226 ZIRI (SI)
(74) Representative: Ivancic, Bojan

(56) References cited:
- WO-A1-00/09284
- WO-A1-97/11346
- DE-A1- 3 533 929
- DE-C- 96 323
- DE-C- 826 349
- DE-U1- 9 206 629
- FR-A- 567 485
- FR-A- 904 860
- GB-A- 639 315

## Description

The present invention refers to an accessory for an increment borer according to the preamble of claim 1. Such an accessory is known from WO 97 11 346 A1.

Hand-held increment borers have been disclosed in several patent documents such as FR 567 485 A, GB 639 315 A, DE 826 349 C and several more. In general, disclosed increment borer comprises a tubular drill shaft formed at the free end thereof with a square projection to engage a handle. Said handle is fixed to said drill shaft by means of a locking bar that cooperates with a suitable cut on the free end of the drill shaft. Afterwards, the increment borer assembled as described before is driven in a clock-wise direction into a live wood, and is driven in the opposite direction out of the live wood. In order for the increment borer to be driven in the wood an electric power engine is often used, said handle must be separated from the drill shaft and the latter is to be fixed by means of an accessory into a chuck of the electric power engine. Nevertheless, problems occur with such a work, since the electric power engine is not capable of driving the increment borer deep enough in the live wood. Even bigger problems occur during driving the borer out of the live wood, since said accessory is simply stuck to the drill shaft resulting in a fact that it is not possible to turn the drill shaft and pull it out of the wood simultaneously. Therefore, the electric power engine must be disconnected from the drill shaft and replaced by said handle in order for the drill shaft to be driven out of the live wood. Working in the described manner is rather difficult, and breakdowns of the connection between the handle and the drill shaft are frequent.

It is the object of the present invention to create an accessory for an increment borer, which will remedy the drawbacks of the known solutions.

The object as set above is solved with characteristics as set forth in a characterising clause of claim 1. Preferred embodiments are disclosed in the dependent claims.

The invention is further described in detail by way of non-limiting preferred embodiment, and with a reference to the accompanying drawing, where
Fig. 1 shows a three-dimensional view of an accessory with an increment borer according to the invention,
Fig. 2 shows an increment borer to be used with accessory according to the invention.

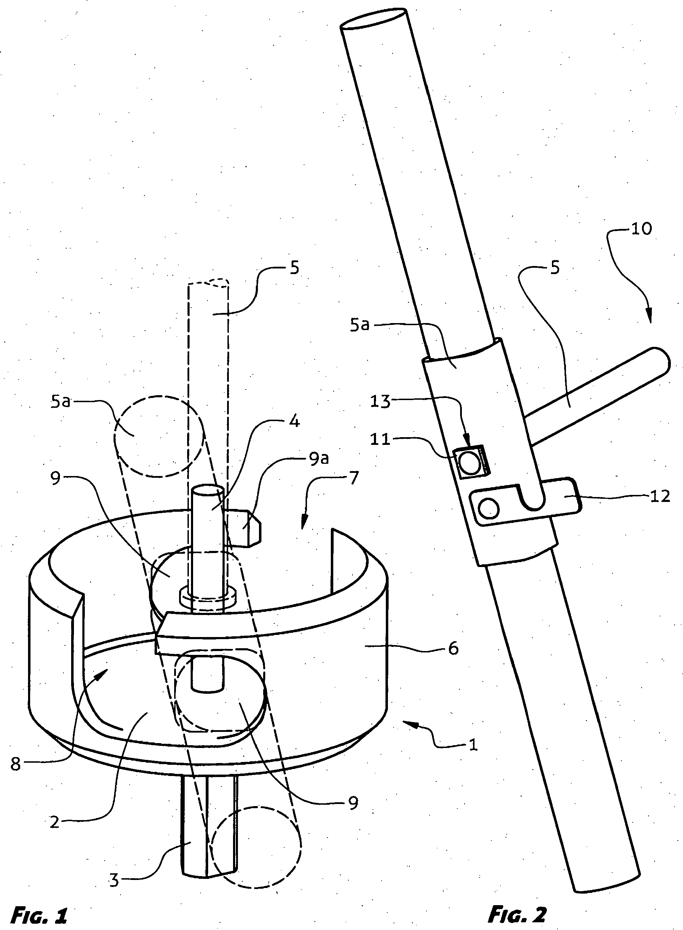

An accessory for an increment borer according to the invention is formed as a cylindrical cup 1 with a bottom 2, a projection 3 for cooperation with an electric power engine, not shown, being coaxially associated with said bottom 2 outside of said cup 1. Further, a cylindrical projection 4 for cooperation with a shaft 5 of a borer (in Fig. 1 shown with a dashed line) is coaxially associated with said bottom 2 inside of said cup 1. A wall 6 of said cup 1 is formed in the direction averted from the bottom 2 with a diametrically opposite lying oval recesses 7, 8. Preferably said recesses 7, 8 are formed in a manner that the longer centre-line thereof extends approximately in parallel with the bottom 2. Further, each recess 7, 8 is formed at the first longitudinal end thereof in a manner that it extends over the entire height of said wall 6, whereas the opposite end of said recess 7, 8 forms a sort of a pocket 9 in said wall 6. Thus, at the side averted from said bottom 2 each said pocket 9 is bordered with a web 9a. It is provided for, according to the present invention, that the dimensions of said recess 7, 8 are adapted to receive a handle 5a of the increment borer, so that the recess 7, 8 receive the handle 5a without difficulty.

In order to better understand the essence of the invention, a known increment borer is described in the continuation. The increment borer comprises a tubular shaft 5 the first end thereof being formed as a drilling section 10 and the other end thereof being formed with a square projection 11 to receive the handle 5a. Said shaft 5 is fixed to the handle 5a by means of a rotating locking bar 12 which cooperates in a locking manner with a circular groove 13 in said square projection 11 projecting from the handle 5a.

When working with the increment borer, the accessory according to the invention is connected by means of the projection 3 with the electric power engine (not shown in the Fig.); for example said projection 3 is fixed in a chuck of the electric power engine. Afterwards, the assembled increment borer is inserted onto said cylindrical projection 4 in a manner that said tubular shaft 5 with a square projection 11 thereof presses on the bottom 2 of said cup 1. The handle 5a of the increment borer slips into the recess 7, 8 in the place, where said recess extends over the entire wall 6 of the cup 1. Afterwards, driving the borer into the live wood, where a sample is to be taken from, takes place in a manner known per se. The accessory according to the invention acts by means of the wall 6 of the recess 7, 8 upon each leg of the handle 5a and rotates it in a clock-wise direction together with the shaft 5 being positively connected therewith. If the electric power engine can not rotate the drill shaft any more, then said electric power engine is disengaged from the projection 3 and the increment borer is manually rotated to the required depth. When the desired depth is reached, either using the electric power engine or manually, the electric power engine is disengaged from the projection 3, if used to reach the required depth. Afterwards, a sample is taken using an appropriate sampling tongue, known per se and, thus, not shown and described. In the continuation, the increment borer is manually turned in the opposite direction for approximately half a turn or one turn, thus, separating the sample from the tree trunk, followed by taking the sampling tongue along with the sample out of the increment borer.

The aforementioned steps are followed by reattaching the electric power engine to said projection 3 and the rotation of the increment borer in order for each leg of the handle 5a to slip into said pocket 9 of each recess 7, 8. The increment borer is than pulled out of the tree using the electric power engine and rotating the borer into anticlockwise direction. Both, the electric power engine and the increment borer are to be pulled out of the tree using relatively high force. As mentioned above, each leg of the handle 5a is now located in said pocket 9 of each recess 7, 8, thus, when pulling the increment borer out of the tree the legs of the handle 5a press on said web 9a. In this manner, unwanted disengagement of the electric power engine off the accessory according to the invention is prevented.

## Claims

1. Accessory for an increment borer used to extract a section of wood tissue from living trees for dendrochronology researche, in particular to motorize an increment borer preferably driven by means of a hand-held electric power engine, wherein the accessory is formed as a cylindrical cup (1) with a bottom (2) and a wall (6), a projection (3) for cooperation with an electric power engine being coaxially associated with said bottom (2) outside said cup (1), and a cylindrical projection (4) for cooperation with a shaft (5) of an increment borer coaxially associated with said bottom (2) inside said cup (1), **characterized by** said wall (6) being formed in the direction averted from the bottom (2) with diametrically opposite lying oval recesses (7, 8), said recesses (7, 8) being adapted to receive a handle (5a) of the increment borer.

2. Accessory of an increment borer according to claim 1, ***characterized in that*** the longer centre-line of said recesses (7, 8) extends approximately in parallel with the bottom (2).

3. Accessory of an increment borer according to claims 1 and 2, ***characterized in that*** each recess (7, 8) at the first longitudinal end thereof extends over the entire height of said wall (6).

4. Accessory of an increment borer according to claims 1 and 2, ***characterized in that*** said recess (7, 8) forms at the opposite end a pocket (9) in said wall (6), being bordered at the side averted from said bottom (2) with a web (9a).

## Patentansprüche

1. Zubehörteil für einen Zuwachsbohrer zur Verwendung zur Entnahme eines Holzgewebeausschnitts aus lebenden Bäumen für dendrochronologische Untersuchungen, insbesondere zur Motorisierung eines Zuwachsbohrers, der vorzugsweise mittels eines tragbaren Elektroantriebsmotors betrieben wird, wobei das Zubehörteil als ein zylindrischer Außenring (1) mit einem Boden (2) und einer Wand (6) ausgebildet ist, wobei ein Vorsprung (3) zum Zusammenwirken mit einem Elektroantriebsmotor an der Außenseite des Außenrings (1) koaxial mit dem Boden (2) in Verbindung steht, und wobei ein zylindrischer Vorsprung (4) zum Zusammenwirken mit einem Schaft (5) eines Zuwachsbohrers im Inneren des Außenrings (1) koaxial mit dem Boden (2) verbunden ist, **dadurch gekennzeichnet, dass** die Wand (6) in der von dem Boden (2) abgewandten Richtung mit diametral entgegengesetzt liegenden ovalen Aussparungen (7, 8) ausgebildet ist, wobei sich die Aussparungen (7, 8) zur Aufnahme eines Griffs (5a) des Zuwachsbohrers eignen.

2. Zubehörteil für einen Zuwachsbohrer nach Anspruch 1, **dadurch gekennzeichnet, dass** sich die längere Mittelachse der Aussparungen (7, 8) annähernd parallel zum Boden (2) erstreckt.

3. Zubehörteil für einen Zuwachsbohrer nach den Ansprüchen 1 und 2, **dadurch gekennzeichnet, dass** sich jede Aussparung (7, 8) an ihrem ersten Ende in Längsrichtung über die gesamte Höhe der Wand (6) erstreckt.

4. Zubehörteil für einen Zuwachsbohrer nach den Ansprüchen 1 und 2, **dadurch gekennzeichnet, dass** die Aussparung (7, 8) an dem entgegengesetzten Ende eine Tasche (9) in der Wand (6) bildet, die an der von dem Boden (2) abgewandten Seite durch einen Steg (9a) begrenzt ist.

## Revendications

1. Accessoire pour une tarière de Pressler utilisée pour extraire une section de tissu de bois à partir d'arbres vivants pour une recherche de dendrochronologie, en particulier pour motoriser une tarière de Pressler de préférence entraînée au moyen d'un moteur électrique portatif, l'accessoire étant formé sous la forme d'une coupelle cylindrique (1) avec un fond (2) et une paroi (6), une saillie (3) pour une coopération avec un moteur électrique étant associée coaxialement avec ledit fond (2) à l'extérieur de ladite coupelle (1), et une saillie cylindrique (4) pour une coopération avec un arbre (5) d'une tarière de Pressler étant associée coaxialement avec ledit fond (2) à l'intérieur de ladite coupelle (1), **caractérisé par** ladite paroi (6) qui comporte dans la direction s'écartant du fond (2) des cavités ovales disposées de façon diamétralement opposée (7, 8), lesdites cavités (7, 8) étant aptes à recevoir une poignée (5a) de la tarière de Pressler.

2. Accessoire pour une tarière de Pressler selon la revendication 1, **caractérisé par le fait que** la ligne médiane plus longue desdites cavités (7, 8) s'étend approximativement parallèlement au fond (2).

3. Accessoire pour une tarière de Pressler selon les revendications 1 et 2, **caractérisé par le fait que** chaque cavité (7, 8), au niveau de la première extrémité longitudinale de celle-ci, s'étend sur toute la hauteur de ladite paroi (6).

4. Accessoire pour une tarière de Pressler selon les revendications 1 et 2, **caractérisé par le fait que** ladite cavité (7, 8) forme, au niveau de l'extrémité opposée, une poche (9) dans ladite paroi (6), bordée sur le côté écarté dudit fond (2) avec une bande (9a).
